# EUROPÄISCHE PATENTSCHRIFT

(11) **EP 0 475 097 B1**
(45) Veröffentlichungstag und Bekanntmachung des Hinweises auf die Patenterteilung: **15.06.1994**
(21) Anmeldenummer: 91113611.7
(22) Anmeldetag: 14.08.1991
(51) Int. Cl.: E03C 1/084, F16K 47/14

(54) **Durchflussregler**
Flow governor
Régulateur d'écoulement

(30) Priorität: 14.09.1990 DE 4029183
(43) Veröffentlichungstag der Anmeldung: 18.03.1992
(73) Patentinhaber: Kuhn, Katharina, D-65366 Johannisberg (DE)
(72) Erfinder: Kuhn, Dieter, D-65366 Johannisberg (DE)
(74) Vertreter: Weber, Dieter, Dr.

(56) Entgegenhaltungen:
- DE-A- 3 437 013
- DE-C- 23 396
- DE-U- 8 527 320
- FR-A- 1 489 974
- FR-A- 2 473 585
- US-A- 2 585 845

## Beschreibung

Die vorliegende Erfindung betrifft einen Durchflußregler für gasförmige oder flüssige Medien, mit einem Gehäuse, einer Regeleinheit, welche in Abhängigkeit vom Fließdruck ihren freien Durchflußquerschnitt verändert und mit einer Verteilereinheit. Dabei kann die Reglereinheit zum Beispiel ein den Durchflußquerschnitt teilweise begrenzendes Teil sein, welches axial federnd gelagert ist und durch axiale Verschiebung in einem konischen Gehäusebereich den Durchflußquerschnitt bei größer werdendem Druck verringert.

Die Verteilereinrichtung ist im einfachsten Fall eine Scheibe mit einer Vielzahl gleichmäßig verteilter, kleiner Bohrungen, aus welchen das Medium entsprechend fein verteilt in einzelnen dünnen Strahlen herauskommt. Im folgenden soll der Einfachheit halber ausschließlich Wasser als Fließmedium betrachtet werden, wobei hierin jedoch keine Einschränkung liegen soll und sich entsprechende Aussagen ohne weiteres auch auf andere Fließmedien, insbesondere auch auf gasförmige Stoffe, übertragen lassen.

Derartige Durchflußregler werden auch häufig an Wasserhähnen verwendet, um den Wasserverbrauch zu reduzieren bzw. auf einem niedrigen Niveau zu halten. Bei einem Durchflußregler für Wasserhähne besteht die Verteilereinrichtung zumeist aus einer Lochscheibe der oben beschriebenen Art und einer in Strömungsrichtung im Abstand hierzu angeordneten Gruppe von Grob- und Feinsieben, wobei in der Wand des die gesamte Anordnung umgebenden Gehäuses zwischen der Verteilerscheibe und den Sieben Öffnungen vorgesehen sind, durch die Luft angesaugt und dem durch den Regler strömenden Wasser beigemischt wird, welches anschließend entsprechend fein verteilt und mit Luft durchmischt aus der Siebanordnung austritt. Derartige Anordnungen mit einer Verteilereinrichtung, Luftansaugöffnungen und einer Siebanordnung werden auch als "Luftsprudler" bezeichnet. Die meisten Luftsprudler weisen jedoch keine Regeleinrichtung auf.

Daneben sind auch noch sogenannte Wassersparregler oder Wasserspareinsätze bekannt, die sich von den Luftsprudlern im wesentlichen nur dadurch unterscheiden, daß sie eine zusätzliche Durchflußbegrenzung, die auch mit der Verteilerscheibe identisch sein kann, aufweisen, so daß der freie Durchflußqerschnitt insgesamt und unabhängig vom Druck dauerhaft geringer ist als bei herkömmlichen Wassersprudlern, so daß die Durchflußmenge über den ganzen Druckbereich hinweg im wesentlichen um den gleichen Prozentsatz gegenüber den herkömmlichen Wassersprudlern reduziert wird. Auch diese "Wassersparregler" weisen also im allgemeinen kein Regelteil im Sinne der vorliegenden Erfindung auf, bei welchem sich der Durchflußquerschnitt in Abhängigkeit vom Fließdruck verändert, das heißt mit steigendem Fließdruck kleiner wird. Mit den letztgenannten Durchflußreglern versucht man unabhängig vom Fließdruck eine möglichst konstante Durchflußmenge einzustellen.

Dabei wird häufig angestrebt, daß die einzustellende Sollmenge möglichst schon bei einem sehr geringen Druck durch den Durchflußregler hindurchfließt und dann bei steigenden Drücken über einen möglichst großen Druckbereich hinweg konstant bleibt. Weiterhin strebt man generell an, den Gesamtaufbau des Reglers möglichst einfach zu halten, so daß dieser leicht und preiswert herstellbar ist.

Es ist bereits ein Durchflußregler, wie in DE-A-34 37 013, mit den eingangs genannten Merkmalen bekannt, bei welchem die Regeleinrichtung einen sehr einfachen Aufbau hat, indem sie aus einem im wesentlichen konusförmigen, elastischen Kunststoffteil besteht, in welchem sich in radialer Richtung Schlitze aus der Nähe des Zentrums nach außen zum Rand des Konus hin erstrecken, jedoch vor dem äußeren Rand dieses Reglerkörpers enden. Die Schlitze können dabei von einer zentralen Durchflußöffnung des Konus ausgehen. Eine solche Regeleinrichtung wird mit dem konisch zulaufenden Ende gegen die Strömungsrichtung in dem Durchflußregler montiert, so daß die einzelnen Lamellen, in welche der Konus durch die Schlitze aufgeteilt ist, von dem auf sie wirkenden Druck axial und radial nach innen gedrückt werden, wobei die Schlitze zwischen den Lamellen sich verschließen und der Durchmesser der gegebenenfalls vorgesehenen zentralen Öffnung kleiner wird, bis alle Lamellen fest aneinander liegen und sich der Querschnitt auch bei noch weiter steigendem Druck schließlich nicht mehr verändert.

Mit einer solchen einfachen Regelanordnung ist es bereits gelungen, bei Durchflußreglern für Wasser die Durchflußmenge über einen Druckbereich von etwa 1 bis 10 bar weitgehend konstant zu halten.

Allerdings ist die genaue Durchflußmenge aufgrund herstellungsbedingter Toleranzen der einzelnen Bauteile nur sehr schwer genau festzulegen. In der Praxis ergeben sich Streuungen für die hindurchfließende Maximalmenge im Regelungsbereich (der zum Beispiel 1 bis 10 bar beträgt), die - bei im wesentlichen identischen Aufbau der Regeleinrichtungen - Streuungen im Bereich von 10 % und sogar darüber aufweisen.

Außerdem zeigt die Kurve der Durchflußmenge pro Zeiteinheit in Abhängigkeit vom Fließdruck keinen exakt konstanten Wert, sondern verläuft zumeist über ein mehr oder weniger ausgeprägtes Maximum im Bereich von 2 bis 3 bar Fließdruck.

Gegenüber diesem Stand der Technik liegt der vorliegenden Erfindung die Aufgabe zugrunde, einen Durchflußregler mit den eingangs genannten Merkmalen zu schaffen, dessen Aufbau nach wie vor relativ einfach ist und welcher dennoch eine konstantere Mengenbegrenzung einzuhalten erlaubt und weniger empfindlich gegen Herstellungstoleranzen der einzelnen Bauteile ist.

Diese Aufgabe wird dadurch gelöst, daß in Strömungsrichtung hinter der Regeleinheit, das heißt zwischen der Reglereinheit und der Verteilereinheit eine Lochscheibe mit mindestens einem Loch vorgesehen ist, welche in Axialrichtung mindestens im Lochbereich begrenzt bewegbar ist.

Es versteht sich, daß eine solche Lochscheibe praktisch eine weitere Durchflußbegrenzung darstellt. Dabei wird allerdings das Loch der Lochscheibe so groß gewählt, daß dennoch im Regelbereich die gewünschte Sollmenge durch den Regler hindurchfließt.

Die axiale Beweglichkeit der Lochscheibe zumindest im Lochbereich bringt es jedoch mit sich, daß überraschenderweise die angestrebte Sollmenge über einen großen Druckbereich besser konstant gehalten werden kann und daß die herstellungsbedingten Streuungen, die sich ansonsten für derartige Durchflußregler ohne Verwendung dieser Lochscheibe ergeben haben, deutlich reduziert werden.

Die zugrundeliegende Wirkungsweise der Lochscheibe ist nicht vollständig geklärt. Es scheint jedoch, daß bei Beaufschlagung des Reglers mit Druck, zunächst der volle Druck auch auf die Lochscheibe wirkt, da der Regler normalerweise bereits mit dem Fließmedium gefüllt ist. Die Lochscheibe gibt in Axialrichtung nach, was zu einer Druckentlastung des Raumes zwischen Regeleinrichtung und Lochscheibe führt. Der über die Regeleinrichtung abfallende Differenzdruck wird damit größer und sorgt für ein schnelles Ansprechen des Reglers, so daß der auf die Lochscheibe wirkende Druck wieder abnimmt, die sich dann wieder in axialer Richtung zurückbewegt, bzw. elastisch zurückfedert. Dies führt wieder zu einem leichten Anstieg des Druckes im Bereich zwischen Regeleinrichtung und Lochscheibe, so daß der Differenzdruck über der Regeleinrichtung abnimmt und die Regeleinrichtung entsprechend weiter öffnet, woraufhin der eben beschriebene Vorgang von neuem beginnt. Tatsächlich läuft dieser Vorgang sehr schnell ab, so daß man ein leichtes Vibrieren, das heißt schnelle axiale Hin- und Herbewegungen der Lochscheibe beobachten kann. Im Ergebnis wirkt sich diese wechselseitige Beeinflußung von Lochscheibe und Reglereinrichtung auf die dynamischen Strömungsverhältnisse in der Weise aus, daß die oben erwähnten Vorteile, konstantere Durchflußmenge im Regelbereich und geringere Toleranzabweichungen der Durchflußmenge, erzielt werden.

Das Hinzufügen einer einzelnen Lochscheibe macht den Aufbau nur unwesentlich komplizierter und verteuert die Herstellung eines solchen Durchflußreglers nicht nennenswert. Auf jeden Fall wiegen die erzielten Vorteile die damit verbundenen Kostennachteile bei weitem auf, die allenfalls im Promillebereich liegen.

In der bevorzugten Ausführungsform der Erfindung ist vorgesehen, daß in Strömungsrichtung hinter dem mindestens einen Loch der Lochscheibe ein in Richtung des Loches ragender Vorsprung angeordnet ist, dessen Abstand zu der ihm zugewandten Fläche der Lochscheibe, wenn diese maximal in Strömungsrichtung verschoben ist, kleiner als der Lochradius ist. Dieser Vorsprung begrenzt dann den Durchfluß durch das Loch zumindest in der Stellung, in welcher der Lochbereich in Axialrichtung maximal verschoben ist, was das Vibrieren der Lochscheibe noch leichter auslöst.

Die beschriebene Funktionsweise ist jedoch nur eine Modellvorstellung, wobei es letztlich nicht darauf ankommt, ob die Bewegungen der Lochscheibe tatsächlich aufgrund der beschriebenen Druckverhältnisse erzeugt werden. Im Ergebnis reicht es aus, wenn die konkreten Mittel bekannt sind, durch die die angestrebten Wirkungen erzielt werden.

Zweckmäßigerweise ist der Vorsprung ein an der in Strömungsrichtung folgenden Verteilereinrichtung angeordneter Stift. Dabei weist die Verteilereinrichtung in der bevorzugten Ausführungsform der Erfindung eine Verteilerscheibe mit im wesentlichen gleichmäßig über ihre Fläche verteilten Durchflußöffnungen auf.

Diese Verteilerscheibe sorgt dafür, daß das beispielsweise aus nur einem oder wenigen Löchern der Lochscheibe ausströmende Wasser (bzw. Fließmedium) gleichmäßig über den gesamten Querschnitt des Reglers bzw. den Innenquerschnitt des Gehäuses verteilt wird.

Die Verteilereinrichtung besteht außerdem in der bevorzugten Ausführungsform der Erfindung aus der bereits erwähnten Verteilerscheibe und zusätzlichen, im Abstand von der Verteilerscheibe angeordneten Grob- und/oder Feinsieben. Dabei weist das Gehäuse zweckmäßigerweise zwischen Verteilerscheibe und der Siebanordnung Öffnungen auf.

Es versteht sich, daß die Lochscheibe, um die angestrebte Wirkung zu erzielen, einen gewissen Mindestabstand von der Verteilerscheibe haben muß, was sich am leichtesten dadurch verwirklichen läßt, daß an der Verteilerscheibe ein axialer Abstandhalter für die Lochscheibe und zweckmäßigerweise darüber hinaus auch noch ein Abstandshalter für die auf der anderen Seite der Verteilerscheibe vorgesehene Siebanordnung angeordnet ist.

Der Abstandhalter für die Lochscheibe hat zweckmäßigerweise die Form eines Vorsprunges an einem in Form eines Zylindermantels am Außenrand der Verteilerscheibe angeordneten Bund. Auf diese Weise kann der Abstandhalter ein zweckmäßigerweise zentral in der Lochscheibe angeordnetes Loch und die Strömung durch dieses hindurch nicht beeinflussen. Selbstverständlich kann die Lochscheibe auch mehrere, gegebenenfalls kleinere Löcher aufweisen, wobei in diesem Fall an der Verteilerscheibe auch mehrere, der Zahl der Löcher der Lochscheibe entsprechende Stifte angeordnet sein können.

Auch in diesem Fall sollte die axiale Länge der Stifte höchstens der axialen Erstreckung entsprechender Abstandhalter bzw. des Vorsprunges am Bund entsprechen. In einer Ausführungsform der Erfindung ist die Lochscheibe mit axialem Spiel zwischen Verteilerscheibe und Reglerteil gelagert. Dies kann beispielsweise auf die Weise erreicht werden, daß der zylindrische Bund zwei voneinander beabstandete Vorsprünge aufweist, wobei sich in Strömungsrichtung der Innendurchmesser des Bundes an den durch die Vorsprünge gebildeten Absätzen bzw. Stufen in zwei Stufen jeweils etwas verengt. Der Durchmesser der Lochscheibe wird dann so gewählt, daß diese über die erste Stufe hinweggleitet und erst auf dem zweiten Absatz aufliegt, während der Außendurchmesser des Reglerteils größer gewählt wird, so daß dieser bereits auf der ersten Stufe zu liegen kommt.

Der Reglerdurchmesser kann jedoch auch so groß gewählt werden, daß er auf dem freien Ende des Bundes aufliegt. Die Lochscheibe ist dann axial zwischen den genannten Absätzen bzw. zwischen dem Absatz und dem Ende des Bundes beweglich gelagert.

In einer anderen Ausführungsform der Erfindung, die jedoch auch mit der beweglichen Lagerung gemeinsam verwirklicht werden kann, ist die Lochscheibe mindestens in ihrem zentralen Bereich, in welchem mindestens ein Loch angeordnet ist, gegenüber dem auftretenden Fließdruck elastisch nachgebend. Dieses elastische Nachgeben der Lochscheibe zumindest im Bereich des darin angebrachten Loches bzw. der darin angebrachten Löcher erzielt genau die oben beschriebenen Wirkungen. Durch die elastische Rückfederung der Scheibe wird dann zumindest im Lochbereich die oben beschriebene vibrierende Bewegung hervorgerufen. Dabei kann man selbstverständlich das Material der Lochscheibe und die Materialstärke in geeigneter Weise auswählen, um den Regler zu optimieren. Unterschiedliche Materialien bzw. Materialstärken führen zu unterschiedlichen Elastizitätskonstanten und damit auch zu unterschiedlichen Resonanzfrequenzen der Scheibe, die im allgemeinen mit ihrer Eigenfrequenz vibriert.

Dabei sollte in der bevorzugten Ausführungsform der Erfindung das Axialspiel bzw. die elastische Durchbiegung der Lochscheibe im Lochbereich bei dem im Regelbereich vorgesehenen maximalen Fließdruck mindestens 0,5 mm betragen. Selbstverständlich sind auch Ausführungsformen denkbar, bei welchen eine mehrschichtige Lochscheibe vorgesehen ist oder aber die Axialbewegungen der Lochscheibe durch Anschläge begrenzt werden.

Besonders bewährt hat sich die Kombination der vorliegenden Erfindung mit dem bereits bekannten Regelteil in Form eines Kunststoffkonus mit sich radial nach außen erstreckenden Schlitzen, welche vor dem Umfang des Konus enden, wobei das sich verjüngende Ende des Konus entgegen der Strömungsrichtung gerichtet ist.

Zweckmäßigerweise hat der Konus einen umlaufenden, vorzugsweise ebenen Flansch, der entweder unmittelbar auf der Lochscheibe oder aber auch einem Absatz des Bundes der Verteilerscheibe aufliegt.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren.

Es zeigen:
- Figur 1: eine perspektivische Schnittansicht der wesentlichen Elemente eines Durchflußreglers,
- Figur 2: wechselweise die axiale und seitliche Draufsicht auf sämtliche Einzelteile eines Reglers gemäß der vorliegenden Erfindung in der vorgesehenen Reihenfolge und
- Figur 3: einen Längsschnitt durch eine Reihe verschiedener Ausführungsformen mit unterschiedlicher Siebanordnung.

Die Figuren sind rein schematische Darstellungen und sind nicht in allen Einzelheiten maßstabsgetreu.

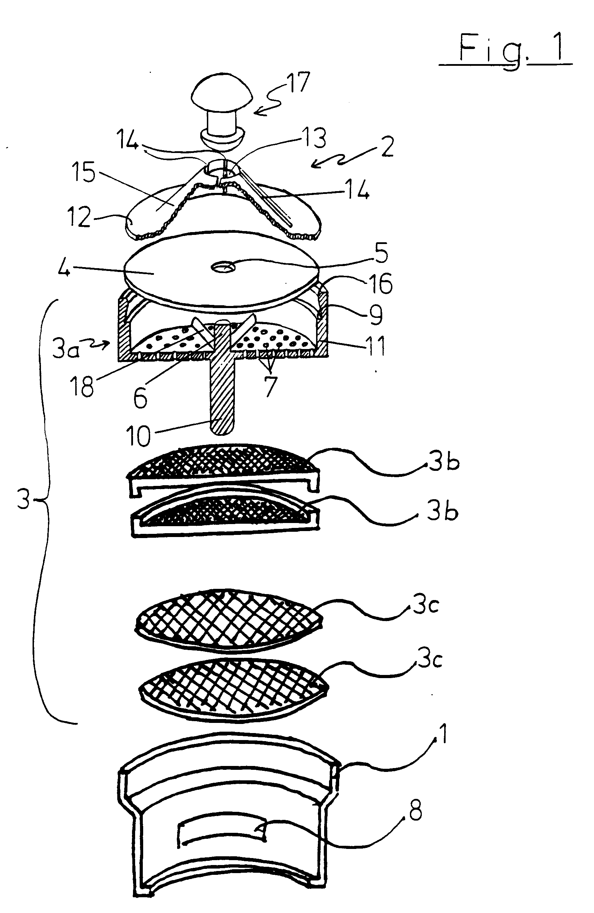

In der Explosionsdarstellung gemäß Figur 1 sind die einzelnen Elemente teilweise weggebrochen oder im Schnitt, teilweise perspektivisch dargestellt. Man erkennt ein Gehäuse 1, welches zum Beispiel aus Kunststoff gefertigt sein kann, und zumeist auf seiner Außenseite als Einsatz für eine an einen Wasserhahn anzuschraubende Metallhülse ausgestaltet ist.

Das Gehäuse hat im oberen und im unteren Bereich einen jeweils unterschiedlichen Innendurchmesser, wobei im unteren, etwas eingeschnürtem Bereich die Siebanordnung 3b aufgenommen wird, während darüber die Verteilerscheibe 3a und der Reglerteil 2 mit der Lochscheibe 4 liegen. Auf dem Absatz, der zwischen dem oberen, weiteren Zylinderteil und dem unteren, engeren Zylinderteil gebildet wird, liegt die Verteilerscheibe 3a auf. Die Verteilerscheibe 3a besteht aus einer ebenen Scheibe mit einer Vielzahl von Löchern mit einem einstückig daran angeformten, im wesentlichen zylindrischen Bund 11 am äußeren Rand der Verteilerscheibe 3a. Im Zentrum der Verteilerscheibe 3a befinden sich einstückig angeformt ein zentraler Stab 10, der sich senkrecht von der Verteilerscheibe 3a in Richtung der Siebanordnung 3b erstreckt und als Abstandhalter dient, sowie ein Stift 6, welcher sich diametral gegenüber von dem Stab 10 nach oben erstreckt und mit dem Loch 5 der Lochscheibe 4 fluchtet. Dabei ist die Lochscheibe 4 in den Bund 11 eingelegt und liegt auf einem Absatz 9a auf, der von einer Stufe 9 an der Innenseite des Bundes 11 gebildet wird.

Das Reglerteil 2 besteht im wesentlichen aus einem Konus, der an seiner Spitze eine zentrale Öffnung 13 und von der Öffnung 13 radial nach außen verlaufende Schlitze 14 hat, durch welche der Konus in mehrere Lamellen 15 aufgeteilt ist. Der Konus geht an seinem äußeren Rand über in einen ringförmigen ebenen Flansch 12, über welchen die Lamellen 15 miteinander verbunden sind. Die Regeleinrichtung 2 besteht aus einem elastischen Kunststoff, wobei Material und Wandstärke des Materials dem jeweiligen Verwendungszweck angepaßt werden. Im Falle einer Reglereinrichtung für einen Wasserhahn, wie er hier beschrieben ist, wird das Material so gewählt, daß er bei einem Fließdruck zwischen 6 und 10 bar die einzelnen Lamellen 15 so weit nach unten und innen gedrückt sind, daß sich die dazwischen befindlichen Schlitze im wesentlichen, zumindest im zentralen Bereich, geschlossen haben und die zentrale Öffnung 13 ihren minimalen Querschnitt erreicht hat.

Bei einer weiteren Erhöhung des Druckes über den vorgesehenen Regelbereich hinaus, ändert sich der Durchflußquerschnitt zunächst nicht mehr.

Das zentrale Loch im Konus kann auch teilweise verschlossen sein, z. B. durch den in Fig. 1 dargestellten Stopfen 17 mit pilzförmigen Köpfen an beiden Enden. Diese Köpfe sichern den Stopfen in axialer Richtung im dem Loch 13. Ein solcher Stopfen oder eine Kappe könnte auch durch elastisch nachgiebige Stege einstückig mit dem Konus 15 verbunden sein, wobei die pilzförmigen Köpfe entfallen köönten. Der Stopfen bewirkt je nach Durchmesser eine mehr oder weniger ausgeprägte weitere Durchflußbegrenzung und dient gleichzeitig als Anschlag für die sich einwärts bewegenden Lamellen.

Der Flansch 12 der Regeleinrichtung 2 hat den gleichen Außendurchmesser wie die Lochscheibe 5. Entsprechend dem vorhandenen Platz in herkömmlichen Luftsprudlern beträgt dieser Durchmesser ca. 20 mm.

Das Loch 5 in der Mitte der Lochscheibe 4 hat einen Durchmesser, der zweckmäßigerweise zwischen etwa 3 und 8 mm liegt. Der Durchmesser des Stiftes 6 muß nicht notwendigerweise mit dem Durchmesser des Loches 5 übereinstimmen, der Stift 6 ist jedoch im wesentlichen koaxial zu dem Loch angeordnet. Sofern das obere Ende des Stiftes sehr nahe an die von der Unterrandfläche der Lochscheibe 4 gebildete Ebene herankommt oder gar in das Loch 5 ein- oder durch dieses hindurchtritt, kann der Durchmesser des Stiftes 6 erheblich geringer sein als der Durchmesser des Loches 5; in diesem Fall können die Rippen 18 am Grund der Verteilerscheibe 3a einen Anschlag für die Axialbewegung der Lochscheibe bilden. Bleibt die Fläche des oberen Endes des Stiftes 6 immer relativ weit von der Ebene der unteren Lochscheibenfläche entfernt, so wird man einen etwas größeren Stiftdurchmesser wählen, der gegebenenfalls auch den Durchmesser des Loches 5 übersteigen kann.

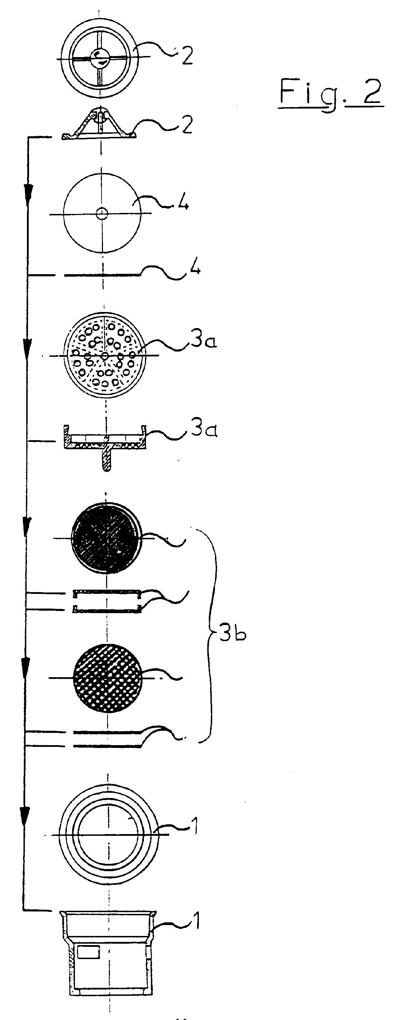

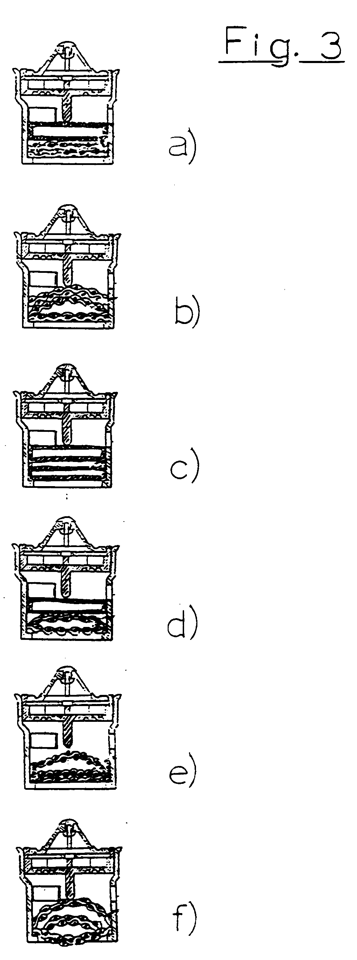

Die axialen Bewegungen der Lochscheibe 4, die im vorliegend beschriebenen Falle durch elastische Vibrationen des zentralen Bereichs der Lochscheibe 4 erreicht werden, bewirken ständige kleine Änderungen des Strömungswiderstandes durch das Loch 5 hindurch, da das durch das Loch 5 hindurchströmende Wasser auf den unmittelbar dahinter angeordneten Stift 6 auftrifft. Optimierungen sind hierbei gegebenenfalls auch noch durch bestimmte Formgebungen des oberen Endes des Stiftes 6 möglich. So kann beispielsweise das obere Ende konkav ausgehöhlt oder konvex gewölbt sein, was jeweils unterschiedliche Auswirkungen auf die Änderungen des Strömungswiderstandes hat. In der dargestellten Ausführungsform ist das obere Ende des Stiftes 6 eben.
Die einzelnen Bauteile sind nochmals einzeln in Figur 2 dargestellt und zwar von oben nach unten zunächst das Reglerteil 2, die Lochscheibe 4, die Verteilerscheibe 3a, zwei Feinsiebe und zwei Grobsiebe, die zusammen die Siebanordnung 3b bilden und schließlich das Gehäuse mit den Öffnungen 8. In Figur 3a sind die vorstehend aufgelisteten Teile in zusammenmontiertem Zustand dargestellt. Man erkennt, daß das Reglerteil 2 mit seinem Flansch 12 auf der Lochscheibe 4 aufliegt und diese auf dem Absatz 9 des Bundes 11 festklemmt. Sinnvollerweise kann zu diesem Zweck der Bund 11 an seiner oberen Innenkante einen Wulst haben, dessen Innendurchmesser etwas kleiner ist als der Außendurchmesser des Reglerteiles, so daß dieses unter Überwindung eines leichten Widerstandes eingedrückt wird und hinter dem Wulst verrastet. Zweckmäßigerweise entspricht dabei der Abstand zwischen dem Absatz 9 und dem Wulst am oberen Innenrand des Bundes 11 gerade der Summe der Materialdicken der Lochscheibe 4 und des Flansches 12 (an ihrem Außenrand).

Man erkennt außerdem in Figur 3a, daß der als Abstandhalter dienende Stab 10 den Abstand zwischen der Siebanordnung 3b und der Verteilerscheibe 3a so fixiert, daß die Öffnungen 8 in der Wand des Gehäuses 1 gerade im Bereich zwischen Verteilerscheibe und Siebanordnung liegen, so daß hier Luft angesaugt und in den Sieben in Form feinster Bläschen beigemischt werden kann.

Wie bereits erwähnt, entspricht die Ausführungsform in Figur 3a genau dem in Figur 2 in Form der Einzelteile dargestellten Aufbau. In Strömungsrichtung gesehen beginnt der Durchflußregler also mit dem Regelteil 2, dann folgt die Lochscheibe 4, wobei diese beiden Teile in dem Bund 11 der Verteilerscheibe 3a aufgenommen sind. Im Abstand unterhalb der Verteilerscheibe 3a folgen dann zwei Feinsiebe, deren Rand jeweils umgebördelt ist und die so angeordnet sind, daß die umgebörtelten Ränder der beiden Feinsiebe gegeneinanderliegen und so auch die beiden Siebflächen im Abstand voneinander halten. Darunter folgen zwei flach aufeinander gelegte Grobsiebe, die den eigentlichen Wasserauslauf bilden.

Alternative Ausführungsformen sind in den Figuren 3b bis 3f dargestellt. Dabei sind in Figur 3b anstelle der beiden Feinsiebe zwei hochgewölbte, in gleicher Orientierung aufeinanderliegende Grobsiebe dargestellt und das Auslaufsieb ist nur ein einzelnes Grobsieb.
Die Ausführungsform nach Figur 3c zeigt vier aufeinanderliegende Feinsiebe mit umgebörtelten Rändern, so daß die Siebebenen jeweils voneinander beabstandet sind.

In Figur 3d ist eine Ausführungsform dargestellt, die im wesentlichen der Ausführungsform gemäß Figur 3a entspricht, wobei jedoch das obere der beiden Grobsiebe in seinem mittleren Bereich nach oben gewölbt ist, so daß es von dem unteren Grobsieb beabstandet ist.

Figur 3e entspricht einer Ausführungsform ähnlich Figur 3b, bei welcher jedoch anstelle zweier hochgeölbter Siebe nur ein hochgewölbtes Grobsieb vorgesehen ist und am Auslauf wiederum zwei flach aufeinanderliegende Grobsiebe vorgesehen sind. Eine weitere Alternative zeigt Figur 3f mit drei aufeinanderliegenden gewölbten Sieben, die so bemessen und angeordnet sind, daß die Siebflächen sich im mittleren Bereich nicht berühren.

Die vorliegende Erfindung funktiert unabhängig von der konkreten Siebanordnung und läßt sich so bei allen dargestellten Ausführungsformen verwirklichen.

Das Gehäuse 1 ist dabei so gestaltet, daß es als ganzes in eine genormte Hülse eingeschoben werden kann, die auf einen Wasserhahn aufschraubbar bzw. einschraubbar ist. Gegebenenfalls können jedoch auch diese Hülsen selbst als Gehäuse dienen, so daß die entsprechenden Teile unmittelbar in eine Einschraubhülse oder eine Aufschraubhülse eingesetzt werden.

Mit der vorliegenden Erfindung ist es gelungen, auf sehr einfache Weise einen Durchflußregler zu verwirklichen, der einen einfachen und preiswerten Aufbau mit einer sehr guten Regelcharakteristik verbindet, bei welcher mit wachsendem Fließdruck zunächst die Durchflußmenge sehr stark zunimmt und dann über einen großen Fließdruckbereich hinweg praktisch konstant gehalten wird. In der Praxis haben sich derartige Durchflußmengenregler bewährt, die auf maximale Durchflußmengen von zum Beispiel 6 oder 10 Liter ausgelegt waren und diese Durchflußmengen mindestens über den Druckbereich zwischen 2 und 6 bar mit einer maximalen Abweichung von 2 bis 3 % konstant hielten.
Selbstverständlich sind auch entsprechende Durchflußregler mit kleineren oder größeren Durchflußmengen oder auch mit beliebigen Zwischenwerten in gleicher Weise herstellbar. Es versteht sich jedoch, daß wegen der Durchflußbegrenzungen, die auch die übrigen Bauteile zwangsweise mit sich bringen, ein höherer Sollwert erst bei einem höheren Minimaldruck erreicht wird als dies bei einer Begrenzung auf eine Durchflußmenge von zum Beispiel 5 oder 6 Liter pro Minute der Fall ist.

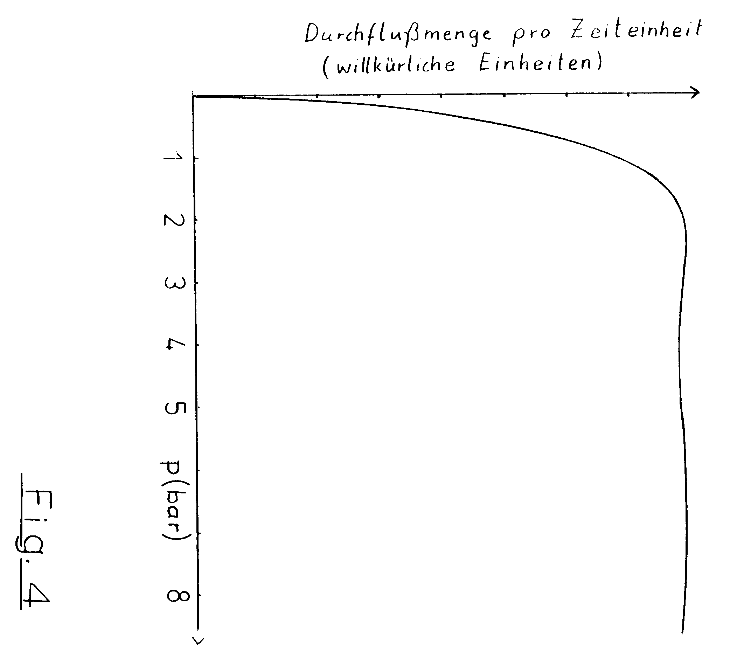

Figur 4 zeigt schematisch den charakteristischen Verlauf der Durchflußmenge, gemessen in Liter pro Minute, in Abhängigkeit vom jeweils eingestellten Fließdruck.

Das Vibrieren der Lochscheibe und die Bewegung der Lamellen des Reglerteiles bringen den Vorteil mit sich, daß Kalkablagerungen an diesen Teilen vollständig vermieden werden. Außerdem werden diese Vibrationen auf die übrigen Bauteile des Durchflußreglers übertragen, so daß auch diese weitgehend von Kalkablagerungen frei bleiben. Die Verkalkungsfreiheit kann man gegebenenfalls noch durch Verwendung verkalkungsarmer Materialien sicherstellen.

Eine optimierte Kombination aus den Bauteilen gemäß Figur 2 oder 3 verursacht beim Durchströmen mit Wasser nur geringe Geräusche, wobei die dargestellten Siebanordnungen schalldämmend wirken.

## Patentansprüche

1. Durchflußregler für gasförmige oder flüssige Medien, mit einem Gehäuse (1), einer Regeleinheit (2), welche in Abhängigkeit vom Fließdruck des Mediums ihren freien Durchflußquerschnitt verändert und mit einer Verteilereinheit (3) in Fließrichtung hinter der Regeleinrichtung (2), **dadurch gekennzeichnet,** daß zwischen Regeleinheit (2) und Verteilereinheit (3) eine Lochscheibe (4) mit mindestens einem Loch (5) vorgesehen ist, welche in Axialrichtung mindestens im Lochbereich begrenzt bewegbar ist.

2. Durchflußregler nach Anspruch 1, **dadurch gekennzeichnet,** daß in Strömungsrichtung hinter dem mindestens einen Loch der Lochscheibe ein in Richtung des Loches ragender Vorsprung angeordnet ist, dessen Abstand zur ihm zugewandten Fläche der Lochscheibe (4), wenn diese maximal in Strömungsrichtung bewegt ist, kleiner als der Radius des Loches (5) ist.

3. Durchflußregler nach Anspruch 2, **dadurch gekennzeichnet,** daß der Vorsprung mindestens ein an der Verteilereinrichtung (3) angeordneter Stift (6) ist.

4. Durchflußregler nach einem der Ansprüche 1 bis 3, **dadurch gekennzeichnet,** daß die Verteilereinrichtung eine Verteilerscheibe (3a) mit im wesentlichen gleichmäßig über ihre Fläche verteilten Durchflußöffnungen (7) aufweist.

5. Durchflußregler nach Anspruch 4, **dadurch gekennzeichnet,** daß die Verteilereinheit außer der Verteilerscheibe in Strömungsrichtung hinter und im Abstand zu der Verteilerscheibe (3a) ein oder mehrere Grob- und/oder Feinsiebe aufweist.

6. Durchflußregler nach einem der Ansprüche 1 bis 5, **dadurch gekennzeichnet,** daß das Gehäuse (1) zwischen Verteilerscheibe (3a) und Siebanordnung (3b) Öffnungen (8) aufweist.

7. Durchflußregler nach einem der Ansprüche 1 bis 6, **dadurch gekennzeichnet,** daß an der Verteilerscheibe (3a) axiale Abstandhalter für die Lochscheibe (4) und/oder die Siebanordnung (3b) vorgesehen sind.

8. Durchflußregler nach Anspruch 7, **dadurch gekennzeichnet,** daß die Verteilerscheibe (3a) an ihrem Außenrand einen umlaufenden, im wesentlichen zylindrischen Bund als Halterung für die Lochscheibe (4) und/oder die Regeleinrichtung (2) aufweist.

9. Durchflußregler nach einem der Ansprüche 1 bis 8, **dadurch gekennzeichnet,** daß an der Verteilerscheibe (3a) der Zahl der Löcher (5) der Lochscheibe (4) entsprechende, mit den Löchern (5) der Lochscheibe (4) fluchtende Stifte (6) angeordnet sind.

10. Durchflußregler nach Anspruch 9, **dadurch gekennzeichnet,** daß die axiale Länge der Stifte (6) höchstens gleich der axialen Länge eines Vorsprunges (9) auf der Innenseite des Bundes (11) ist, wobei der von dem Vorsprung (9) gebildete Absatz (9a) als Abstandhalter für die Lochscheibe (4) dient.

11. Durchflußregler nach einem der Ansprüche 1 bis 10, **dadurch gekennzeichnet,** daß die Lochscheibe (4) mit axialem Spiel zwischen der Verteilereinrichtung (3) und dem Reglerteil (2) gelagert ist.

12. Durchflußregler nach einem der Ansprüche 1 bis 11, **dadurch gekennzeichnet,** daß die Lochscheibe (4) mindestens in ihrem zentralen Bereich, in welchem mindestens ein Loch (5) vorgesehen ist, gegenüber dem auftretenden Fließdruck elastisch nachgebend ist.

13. Durchflußregler nach Anspruch 11 oder 12, **dadurch gekennzeichnet,** daß das Axialspiel bzw. die elastische Durchbiegung der Lochscheibe (4) im Lochbereich bei einem Fließdruck von drei bar mindestens 0,5 mm beträgt.

14. Durchflußregler nach einem der Ansprüche 1 bis 13, **dadurch gekennzeichnet,** daß das Reglerteil im wesentlichen aus einem Kunststoffkonus mit einer zentralen Öffnung (13) und sich radial von der Öffnung (13) nach außen erstreckenden Schlitzen (14) besteht, welche vor dem Umfang des Regelteils enden, wobei das sich verjüngende Ende des Konus (15) gegen die Strömungsrichtung gerichtet ist.

15. Durchflußregler nach Anspruch 14, **dadurch gekennzeichnet,** daß am Außenrand des Konus (15) ein ringförmiger Flansch (12) vorgesehen ist.

16. Durchflußregler nach einem der Ansprüche 1 bis 15, **dadurch gekennzeichnet,** daß die Verteilereinrichtung (3) eine aus mindestens zwei Feinsieben und zwei Grobsieben, die mindestens teilweise voneinander beabstandet sind, bestehende Siebanordnung (3b) aufweist.

## Claims

1. A flow regulator for gaseous or liquid media, having a housing (1), a regulator unit (2) which changes its free flow cross-section in dependency on the flow pressure of the medium, and having a dispenser unit (3) in the direction of flow behind the regulator device (2), characterised in that provided between the regulator unit (2) and the dispenser unit (3) is a perforated disc (4) having at least one hole (5), the perforated disc being movable axially to fixed extents at least in the perforated region.

2. A flow regulator according to Claim 1, characterised in that arranged in the direction of flow behind the, at least one, hole in the perforated disc is a projection which projects in the direction of the hole, the spacing of the projection from the surface of the perforated disc (4) facing it, when this latter is moved to the maximum extent in the direction of flow, being less than the radius of the hole (5).

3. A flow regulator according to Claim 2, characterised in that the projection is at least one pin (6) arranged on the dispenser device (3).

4. A flow regulator according to one of Claims 1 to 3, characterised in that the dispenser device has a dispenser disc (3a) with flow openings (7) which are distributed substantially uniformly over its surface.

5. A flow regulator according to Claim 4, characterised in that the dispenser unit has one or more coarse- and/or fine sieves apart from the dispenser disc in the flow direction behind, and at a spacing away from, the dispenser disc (3a).

6. A flow regulator according to one of Claims 1 to 5, characterised in that the housing (1) has openings (8) between the dispenser disc (3a) and the sieve arrangement (3b).

7. A flow regulator according to one of Claims 1 to 6, characterised in that provided on the dispenser disc (3a) are axial spacers for the perforated disc (4) and/or the sieve arrangement (3b).

8. A flow regulator according to Claim 7, characterised in that on its outer edge the dispenser disc (3a) has a peripheral, substantially cylindrical collar as the support for the perforated disc (4) and/or the regulator device (2).

9. A flow regulator according to one of Claims 1 to 8, characterised in that arranged on the dispenser disc (3a) are pins (6) which correspond to the number of holes (5) in the perforated disc (4) and which are in alignment with the holes (5) in the perforated disc (4).

10. A flow regulator according to Claim 9, characterised in that the axial length of the pins (6) is at the most equal to the axial length of a projection (9) on the inside of the collar (11), wherein the offset portion (9a) which is formed by the projection (9) acts as a spacer for the perforated disc (4).

11. A flow regulator according to one of Claims 1 to 10, characterised in that the perforated disc (4) is mounted with axial play between the dispenser device (3) and the regulator part (2).

12. A flow regulator according to one of Claims 1 to 11, characterised in that at least the central region of the perforated disc (4), in which region at least one hole (5) is provided, is elastically yielding to the flow pressure occurring.

13. A flow regulator according to Claim 11 or 12, characterised in that the axial play or elastic yielding of the perforated disc (4) in the perforated region is at least 0.5 mm when the flow pressure is three bar.

14. A flow regulator according to one of Claims 1 to 13, characterised in that the regulator part consists basically of a plastics cone with a central opening (13) and slits (14) which extend outwardly and radially from the opening (13), the slits ending in front of the periphery of the regulator part, wherein the tapering end of the cone (15) is oriented counter to the direction of flow.

15. A flow regulator according to Claim 14, characterised in that provided on the outer edge of the cone (15) is an annular rim (12).

16. A flow regulator according to one of Claims 1 to 15, characterised in that the dispenser device (3) has a sieve arrangement (3b) consisting of at least two fine sieves and two coarse sieves which are at least partly spaced apart.

## Revendications

1. Régulateur de débit pour fluides gazeux ou liquides, comportant une enveloppe (1), une unité de régulation (2), qui en fonction de la pression d'écoulement du fluide modifie sa section libre de passage, et comportant une unité de répartition (3) qui dans le sens de l'écoulement se trouve en arrière du dispositif de régulation (2), caractérisé en ce qu'on prévoit entre l'unité de régulation (2) et l'unité de répartition (3) un disque perforé (4) ayant au moins un trou (5), et qui, dans la direction axiale, peut se déplacer d'une manière limitée au moins dans la zone du ou des trous.

2. Régulateur de débit selon la revendication 1, caractérisé en ce que, en arrière du ou des trous du disque perforé, quand on regarde dans le sens de l'écoulement, on a une saillie, dépassant dans la direction du trou, dont la distance à la surface, en regard de la saillie, du disque perforé (4), quand ce dernier se déplace sur un déplacement maximal dans le sens de l'écoulement, est inférieure au rayon du trou (5).

3. Régulateur de débit selon la revendication 2, caractérisé en ce que la saillie (1) est au moins une tige (6) disposée contre le dispositif de répartition (3).

4. Régulateur de débit selon l'une des revendications 1 à 3, caractérisé en ce que le dispositif de répartition comporte un disque de répartition (3a), lequel est muni d'ouvertures de passage (7), réparties d'une manière essentiellement uniforme sur sa surface.

5. Régulateur de débit selon la revendication 4, caractérisé en ce que l'unité de répartition comporte, outre le disque de répartition, un ou plusieurs tamis grossiers et/ou fins qui, dans le sens de l'écoulement, sont situés en arrière et à distance du disque de répartition (3a).

6. Régulateur de débit selon l'une des revendications 1 à 5, caractérisé en ce que l'enveloppe (1) comporte des ouvertures (8) entre le disque de répartition (3a) et l'ensemble de tamis (3b).

7. Régulateur de débit selon l'une des revendications 1 à 6, caractérisé en ce qu'on prévoit contre le disque de répartition (3a) des écarteurs axiaux pour le disque perforé (4) et/ou l'ensemble de tamis (3b).

8. Régulateur de débit selon la revendication 7, caractérisé en ce que le disque de répartition (3a) comporte au niveau de son bord extérieur une collerette continue, essentiellement cylindrique, servant de support au disque perforé (4) et/ou au dispositif de régulation (2).

9. Régulateur de débit selon l'une des revendications 1 à 8, caractérisé en ce que des tiges (6), correspondant au nombre des trous (5) du disque perforé (4), et en alignement avec les trous (5) du disque perforé (4), sont disposés contre le disque de répartition (3a).

10. Régulateur de débit selon la revendication 9, caractérisé en ce que la longueur axiale des tiges (6) est au plus égale à la longueur axiale d'une saillie (9) sur le côté intérieur de la collerette (11), l'épaulement (9a) formé par la saillie (9) servant d'écarteur pour le disque perforé (4).

11. Régulateur de débit selon l'une des revendications 1 à 10, caractérisé en ce que le disque perforé (4) est logé avec un jeu axial entre le dispositif de régulation (3) et l'élément régulateur (2).

12. Régulateur de débit selon l'une des revendications 1 à 11, caractérisé en ce que le disque perforé (4), au moins dans sa zone centrale dans laquelle on a prévu au moins un trou (5), est élastique par rapport à la pression d'écoulement appliquée.

13. Régulateur de débit selon les revendications 11 ou 12, caractérisé en ce que le jeu axial, ou la flèche élastique du disque perforé (4), est, dans la zone des trous, d'au moins 0,5 mm pour une pression d'écoulement de 3 bar.

14. Régulateur de débit selon l'une des revendications 1 à 13, caractérisé en ce que l'élément régulateur est pour l'essentiel constitué d'un cône plastique ayant une ouverture centrale (13), et de fentes (14) s'étendant radialement vers l'extérieur à partir de l'ouverture (13), fentes qui se terminent avant la circonférence de l'élément régulateur, le sommet du cône (15) étant dirigé dans le sens inverse du sens de l'écoulement.

15. Régulateur de débit selon la revendication 14, caractérisé en ce qu'une bride annulaire (12) est prévue contre le bord extérieur du cône (15).

16. Régulateur de débit selon l'une des revendications 1 à 15, caractérisé en ce que le dispositif de répartition (3) comporte un ensemble de tamis (3b), constitué lui-même d'au moins deux tamis fins et de deux tamis grossiers, qui, au moins partiellement, sont à une certaine distance l'un de l'autre.
